# EUROPEAN PATENT SPECIFICATION

(11) **EP 4 697 645 B1**
(45) Date of publication and mention of the grant of the patent: **23.09.2026**
(21) Application number: 24788490.1
(22) Date of filing: 11.03.2024
(51) Int. Cl.: H04L 9/32, H04L 9/08, H04L 9/40

(54) **INFORMATION PROCESSING SYSTEM, MANAGEMENT DEVICE, CONTROL DEVICE, AND INFORMATION PROCESSING METHOD**
INFORMATIONSVERARBEITUNGSSYSTEM, VERWALTUNGSVORRICHTUNG, STEUERUNGSVORRICHTUNG UND INFORMATIONSVERARBEITUNGSVERFAHREN
SYSTÈME DE TRAITEMENT D'INFORMATIONS, DISPOSITIF DE GESTION, DISPOSITIF DE COMMANDE ET PROCÉDÉ DE TRAITEMENT D'INFORMATIONS

(30) Priority: 13.04.2023 JP 2023065891
(43) Date of publication of application: 18.02.2026
(73) Proprietor: Panasonic Intellectual Property Management Co., Ltd., Kadoma-shi, Osaka 571-0057 (JP)
(72) Inventor: AKIMOTO, Masao, kadoma-shi, Osaka 571-0057 (JP)
(74) Representative: Appelt, Christian W.
(86) International application number: PCT/JP2024/009412
(87) International publication number: WO 2024/214460

(56) References cited:
- WO-A1-2005/052802
- WO-A1-2020/035137
- WO-A1-2023/021968
- WO-A1-2023/021968
- JP-A- 2003 115 838
- US-A- 5 717 757

## Description

### [Technical Field]

The present invention relates to an information processing system, a management device, a control device, and an information processing method.

### [Background Art]

In public key authentication, a technique of using a certificate revocation list (CRL) is known as a technique of revoking a public key certificate issued by a certificate authority (even if the public key certificate is within a validity period). JP 6719086 B2 discloses a technique related to a CRL.

WO 2023/021968 A1 discloses an information processing system comprising an information terminal, a first management device, and a control device.

WO 2020/035137 A1 discloses certificate status checking.

US 5,717,757 A discloses a method for an authority to provide authenticated information about a plurality of certificate.

### [Summary of Invention]

### [Technical Problem]

The present invention provides an information processing system, etc. capable of reducing a data size of a revocation list such as a CRL.

### [Solution to Problem]

An information processing system, a management device, an information processing method performed by a information processing system, and an information processing method performed by a management device according to the present invention are defined in independent claims 1, 6, 7, 8, respectively. Other preferred embodiments are defined in dependent claims.

### [Advantageous Effects of Invention]

An information processing system, etc. according to one aspect of the present invention are capable of reducing the data size of a revocation list.

### [Brief Description of Drawings]

[FIG. 1]

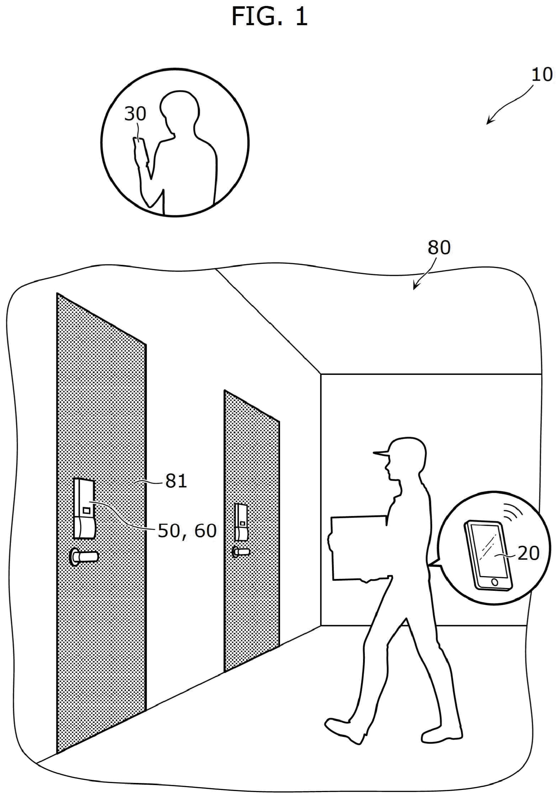

   FIG. 1 is an external view of the information processing system according to an embodiment.
[FIG. 2]

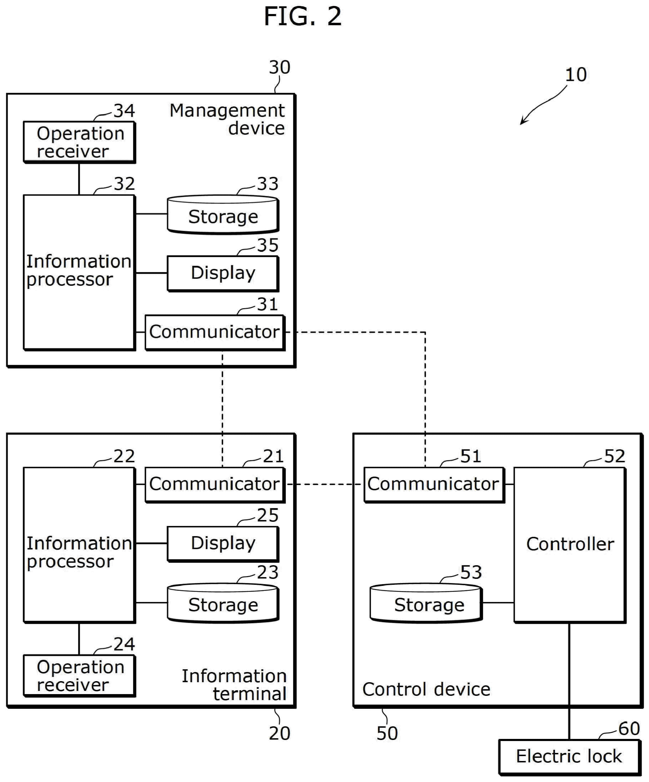

   FIG. 2 is a block diagram illustrating a functional configuration of the information processing system according to the embodiment.
[FIG. 3]

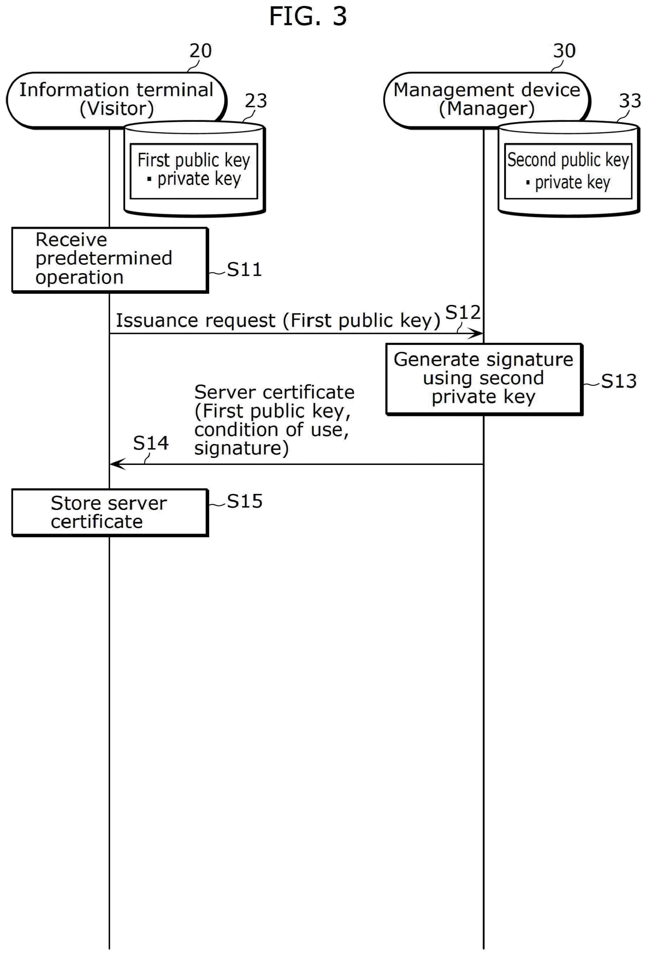

   FIG. 3 is a sequence diagram of the first half of a fundamental operation of the information processing system according to the embodiment.
[FIG. 4]

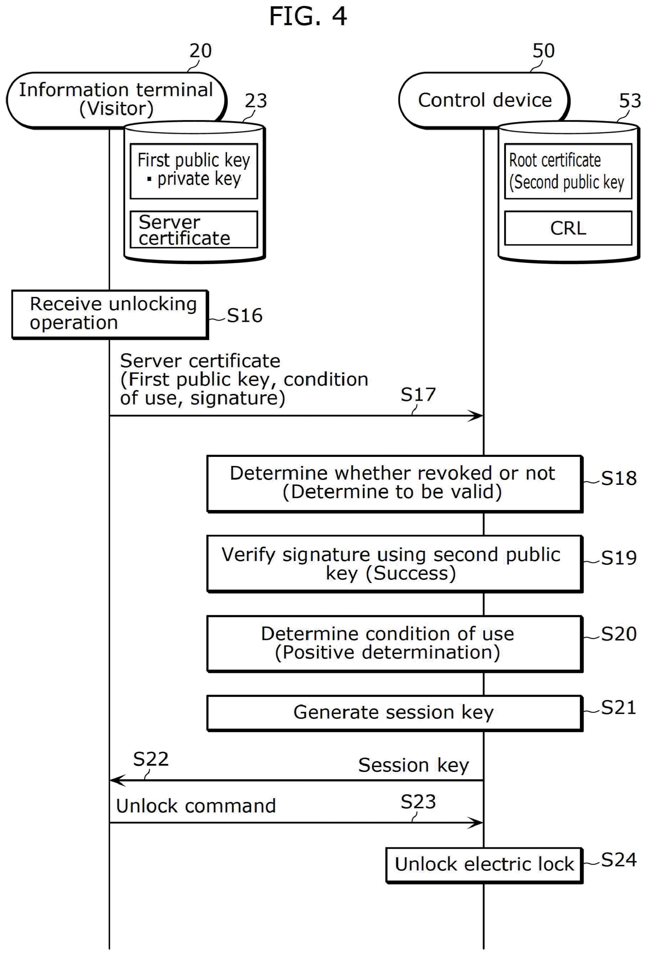

   FIG. 4 is a sequence diagram of the second half of the fundamental operation of the information processing system according to the embodiment.
[FIG. 5]

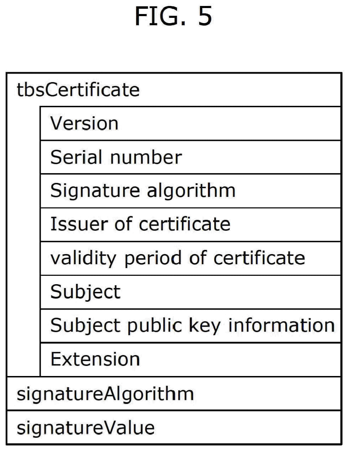

   FIG. 5 is a diagram illustrating an example of a format of a server certificate.
[FIG. 6]

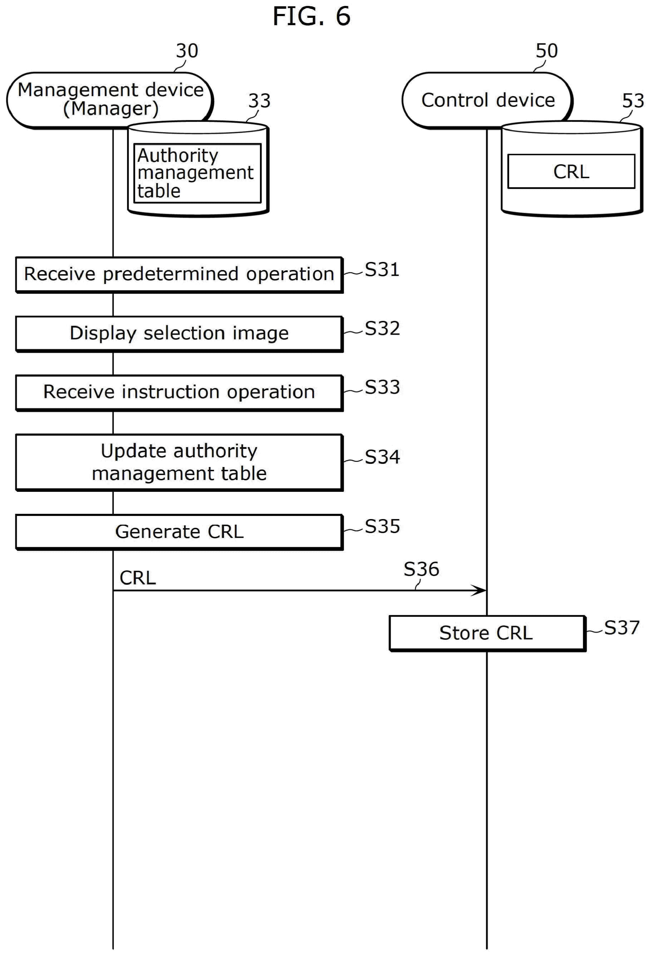

   FIG. 6 is a sequence diagram of an operation of storing a CRL in a control device.
[FIG. 7]

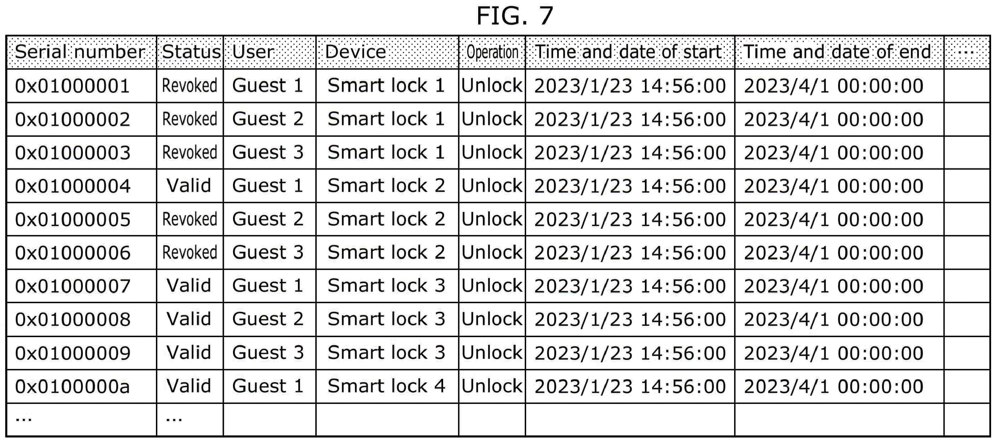

   FIG. 7 is a diagram illustrating an example of an authority management table.
[FIG. 8]

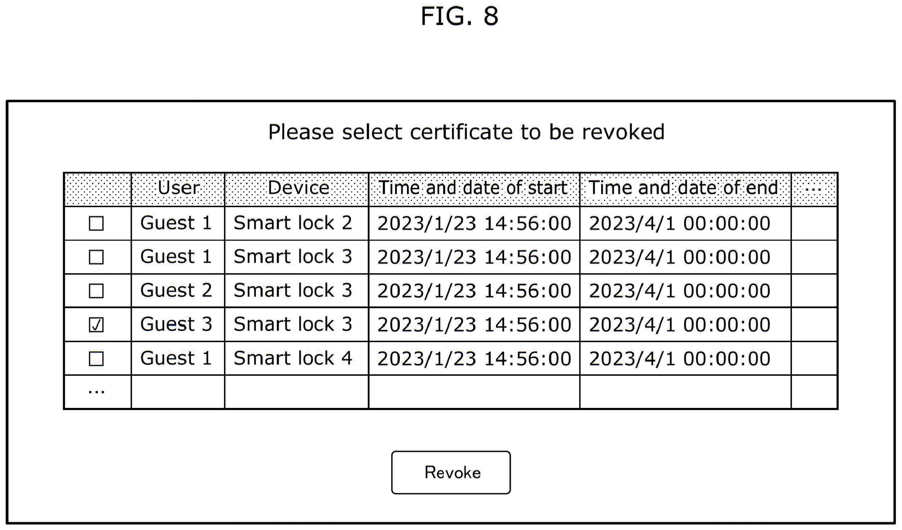

   FIG. 8 is a diagram illustrating an example of a selection image for a server certificate.
[FIG. 9]

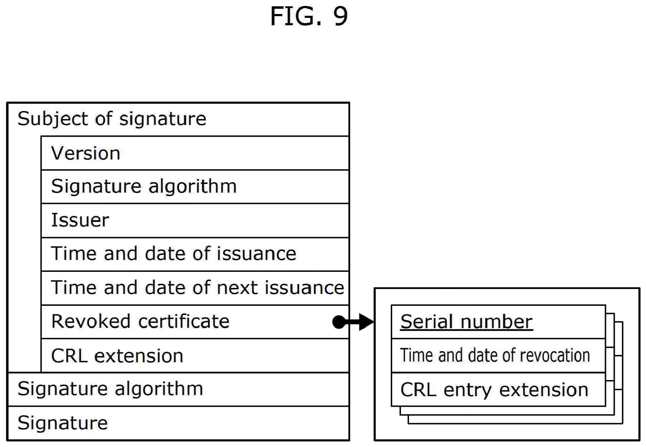

   FIG. 9 is a diagram illustrating an example of a format of a CRL.
[FIG. 10]

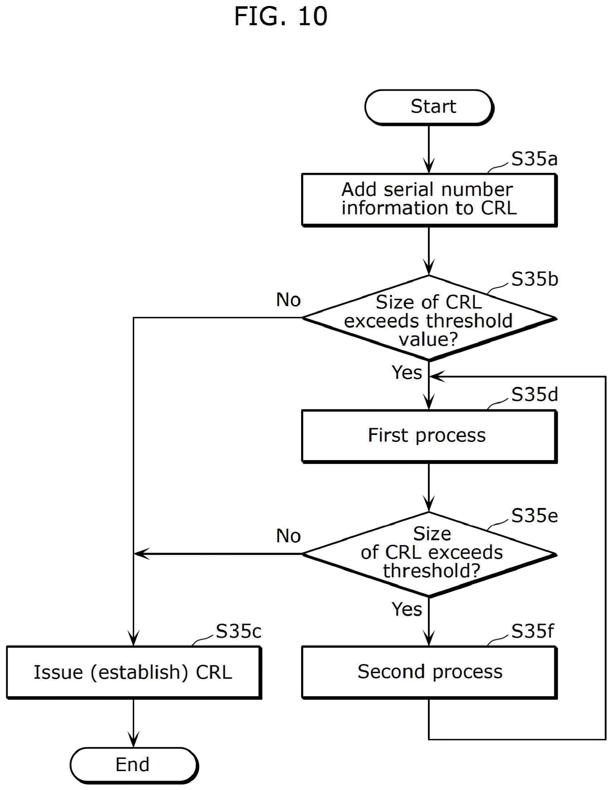

   FIG. 10 is a flowchart of a generation operation of a CRL.
[FIG. 11]

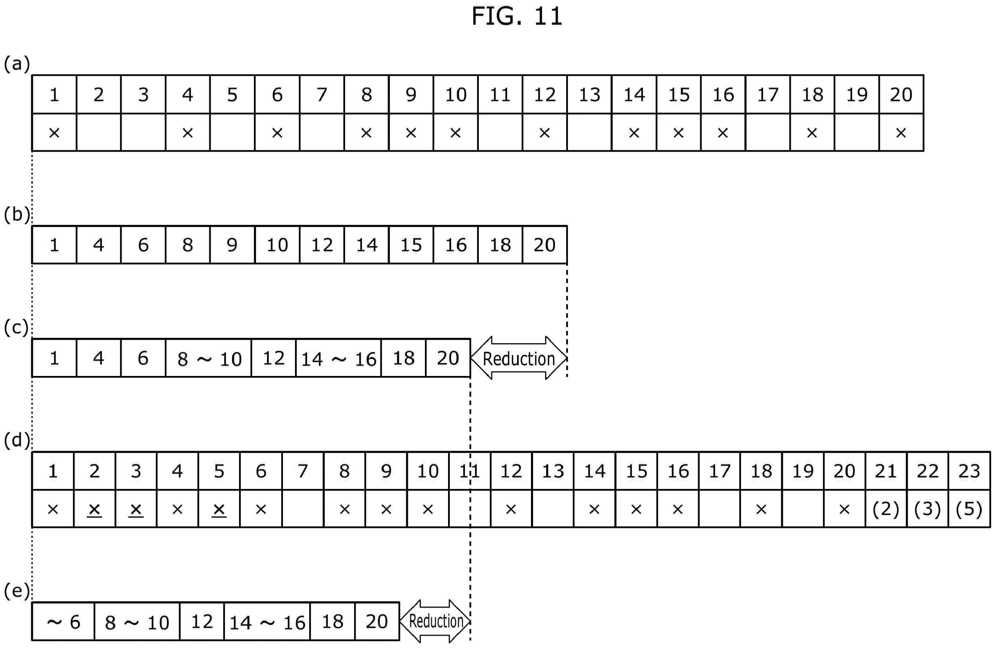

   FIG. 11 is a schematic diagram to illustrate a specific example of the generation operation of a CRL.

### [Description of Embodiments]

Hereinafter, an embodiment will be described in detail with reference to the Drawings. It should be noted that the embodiments described below each show a general or specific example. The numerical values, shapes, materials, structural components, the arrangement and connection of the structural components, steps, the processing order of the steps, and so on, shown in the following embodiment are mere examples, and therefore do not limit the present invention. Among the structural components in the embodiments described below, those not recited in the independent claims will be described as optional structural components.

In addition, each of the diagrams is a schematic diagram and not necessarily strictly illustrated. In each of the diagrams, substantially the same structural components are assigned with the same reference signs, and there are instances where redundant descriptions are omitted or simplified.

### (Embodiment)

### Configuration

First, the configuration of an information processing system according to an embodiment will be described. FIG. 1 is an external view of the information processing system according to the embodiment. FIG. 2 is a block diagram illustrating a functional configuration of the information processing system according to the embodiment.

As illustrated in FIG. 1, information processing system 10 according to the embodiment is a system for authorizing information terminal 20 to unlock (or lock) electric lock 60 in order for a visitor to facility 80 to unlock electric lock 60 using information terminal 20. Information processing system 10 includes: information terminal 20; management device 30; control device 50; and electric lock 60. Control device 50 and electric lock 60 are provided, for example, on door 81 (or a door frame) in facility 80 as an electric lock system. Facility 80 is, for example, a complex housing, but it may be a non-residential facility such as an office building.

Information terminal 20 is an information terminal that is used by a visitor to facility 80 to unlock electric lock 60. Information terminal 20 is a portable information terminal, such as a smartphone or a tablet terminal. Information terminal 20 includes communicator 21, information processor 22, storage 23, operation receiver 24, and display 25.

Communicator 21 is a communication circuit for information terminal 20 to communicate with each of management device 30 and control device 50. Communicator 21, for example, performs wireless communication with management device 30 through a wide area communication network such as the Internet, and performs wireless communication with control device 50 through a local communication network.

Information processor 22 performs information processing, etc. for unlocking electric lock 60. Information processor 22 is implemented by, for example, a microcomputer, but may also be implemented by a processor. The functions of information processor 22 are implemented by, for example, executing a computer program stored in storage 23, by a microcomputer, processor, or the like that constitutes information processor 22.

Storage 23 is a storage device in which information necessary for the above-described information processing and the above-described computer program, etc. are stored. Storage 23 is implemented, for example, by a semiconductor memory.

Operation receiver 24 receives an operation performed by a visitor. Operation receiver 24 is implemented by, for example, a touch panel, but may also be implemented by a hardware key, etc.

Display 25 displays an image. Display 25 is implemented by, for example, a display panel such as a liquid-crystal panel or an organic electroluminescent (EL) panel.

Management device 30 is an information terminal used by a manager or the like of facility 80. The manager or the like is, for example, an owner of facility 80 or an employee of a facility management agent for facility 80. Management device 30 is a portable information terminal, such as a smartphone or a tablet terminal. Management device 30 includes communicator 31, information processor 32, storage 33, operation receiver 34, and display 35.

Communicator 31 is a communication circuit for management device 30 to communicate with each of information terminal 20 and control device 50. Communicator 31 performs, for example, wireless communication with each of information terminal 20 and control device 50 through a wide area communication network.

Information processor 32 performs, for example, information processing for authorizing information terminal 20 to unlock electric lock 60. The information processing for authorizing information terminal 20 to unlock electric lock 60 is, for example, the processing of issuing a server certificate to information terminal 20 (described below). Information processor 32 is implemented by, for example, a microcomputer, but may also be implemented by a processor. The functions of information processor 32 are implemented by, for example, executing a computer program stored in storage 33, by a microcomputer, processor, or the like that constitutes information processor 32.

Storage 33 is a storage device in which information necessary for the above-described information processing and the above-described computer program, etc. are stored. Storage 33 is implemented, for example, by a semiconductor memory.

Operation receiver 34 receives an operation performed by a manager or the like. Operation receiver 34 is implemented by, for example, a touch panel, but may also be implemented by a hardware key, etc.

Display 35 displays an image. Display 35 is implemented by, for example, a display panel such as a liquid-crystal panel or an organic EL panel.

Control device 50 is a control device that controls the locking and unlocking of electric lock 60. Control device 50 is, for example, built into door 81 or a door frame. Control device 50 includes communicator 51, controller 52, and storage 53.

Communicator 51 is a communication circuit for control device 50 to communicate with each of information terminal 20 and management device 30. Communicator 51, for example, performs wireless communication with information terminal 20 through a local communication network, and performs wireless communication with management device 30 through a wide-area communication network.

Controller 52 performs information processing for locking or unlocking electric lock 60. More specifically, controller 52 locks or unlocks electric lock 60 by outputting a control signal to electric lock 60. Controller 52 is implemented by, for example, a microcomputer, but may also be implemented by a processor. The functions of controller 52 are implemented by, for example, executing a computer program stored in storage 53, by a microcomputer, processor, or the like that constitutes controller 52.

Storage 53 is a storage device in which information necessary for the above-described information processing and the above-described computer program, etc. are stored. Storage 53 is implemented, for example, by a semiconductor memory.

Electric lock 60 locks or unlocks door 81 based on a control signal output from controller 52. More specifically, electric lock 60 includes an electric motor and a transmission mechanism that transmits the driving force of the electric motor to the deadbolt. The driving force of the electric motor is transmitted to the deadbolt via the transmission mechanism, thereby causing the deadbolt to move to the locked or unlocked position.

### [Fundamental Operation]

Next, the fundamental operation of information processing system 10 will be described. FIG. 3 and FIG. 4 are sequence diagrams of the fundamental operation of information processing system 10. The following fundamental operation will be described as information terminal 20 being used by a visitor to facility 80, and management device 30 being used by the manager of facility 80. The visitor is, for example, a person dispatched by a housekeeping service provider, a package delivery person, or the like.

First, the operation until a server certificate is stored in storage 23 of information terminal 20 will be described with reference to FIG. 3. The server certificate serves as a permit to unlock electric lock 60. As illustrated in FIG. 3, a first public key and a first private key are stored in storage 23 of information terminal 20. The first public key and the first private key are generated, for example, when an application program (hereinafter also referred to simply as an application) for using information processing system 10 is installed on information terminal 20, and stored in storage 23.

In addition, a second public key and a second private key are stored in storage 33 of management device 30. The second public key and the second private key are stored, for example, in storage 33 when an application for using information processing system 10 is installed on management device 30.

First, the visitor performs a predetermined operation on operation receiver 24 of information terminal 20 which is running the above-described application. The predetermined operation is the operation to install a server certificate. Operation receiver 24 receives the predetermined operation (S11).

When the predetermined operation is received by operation receiver 24, information processor 22 generates an issuance request which is a request to issue a server certificate, and causes communicator 21 to transmit the generated issuance request to management device 30. The issuance request includes the first public key. In other words, communicator 21 transmits the first public key to management device 30 (S12). It should be noted that communicator 21 transmits the first public key to management device 30 via wireless communication through a wide area communication network. The issuance request corresponds to a certificate request defined by RFC 2986.

Communicator 31 of management device 30 receives the issuance request including the first public key. When the manager confirms the issuance request of the visitor and permits the visitor to unlock electric lock 60, information processor 32 generates a signature for the received first public key and a condition of use, using the second private key (S13). In addition, information processor 32 causes communicator 31 to transmit the server certificate including the first public key, the condition of use, and the signature to information terminal 20 (S14). The condition of use is, for example, information indicating a temporal condition (in other words, a validity period), which is predetermined by, for example, the manager, etc. using management device 30. Although it is not illustrated, the server certificate is stored in storage 33.

It should be noted that the X.509 certificate defined by RFC 5280, for example, is used as the format of the server certificate. FIG. 5 is a diagram illustrating an example of the format of a server certificate. The validity period of the certificate in FIG. 5 corresponds to the above-described condition of use, subject public key information corresponds to the first public key, and signatureValue corresponds to the signature. It should be noted that a condition of use other than the validity period may be stored in the extension area of the format in FIG. 5.

Communicator 21 of information terminal 20 receives the server certificate. Information processor 22 stores the received server certificate in storage 23 (S15).

Next, the operation until electric lock 60 is unlocked using a server certificate will be described with reference to FIG. 4. As illustrated in FIG. 4, a root certificate is stored in storage 53 of control device 50. The root certificate includes the second public key. The root certificate is, for example, generated by information processor 32 of management device 30 and transmitted to control device 50 by communicator 31, thereby being stored in storage 53. The root certificate may be stored in storage 53 by the manufacturing facility at the time of manufacture of control device 50. It should be noted that the root certificate is also stored in storage 33 of management device 30.

A certificate revocation list (CRL) is stored in storage 53 of control device 50. A CRL is an example of a revocation list, and is a list of serial numbers of revoked server certificates.

First, a visitor approaches door 81 and performs, on operation receiver 24 of information terminal 20 which is running the above-described application, a predetermined unlocking operation to unlock electric lock 60. Operation receiver 24 receives the unlocking operation (S16). It should be noted that door 81 is, for example, a door provided in a private area of facility 80 (see FIG. 1), but door 81 may also be a door provided at the entrance of facility 80 or a door provided in a common area other than the entrance.

When the unlocking operation is received by operation receiver 24, information processor 22 causes communicator 21 to transmit a server certificate to control device 50. In other words, communicator 21 transmits the server certificate to control device 50 (S17). Communicator 21 transmits the server certificate to control device 50 via wireless communication through the local communication network. This wireless communication is, for example, short-distance wireless communication based on communication standards such as Bluetooth (registered trademark).

Communicator 51 of control device 50 receives the server certificate. Controller 52 determines whether the received server certificate has been revoked (listed or not listed in the CRL) by referring to the CRL stored in storage 53 (S18). When it is determined that the received server certificate has been revoked (listed in the CRL), no further processing subsequent to step S18 is performed.

When controller 52 determines that the received server certificate is valid (not listed in the CRL), controller 52 verifies the signature included in the received server certificate, using the second public key included in the root certificate stored in storage 53 (S19). When the signature is successfully verified, controller 52 determines the condition of use included in the server certificate (S20). As described above, the condition of use is, for example, a temporal condition, and controller 52 determines whether the temporal condition is satisfied. When controller 52 determines that the temporal condition is satisfied, controller 52 generates a session key using the first public key included in the server certificate (S21). Controller 52 encrypts the generated session key with the first public key, and causes communicator 51 to transmit the encrypted session key to information terminal 20 (S22).

Communicator 21 of information terminal 20 receives the encrypted session key. Information processor 22 decrypts the session key using the first private key, and causes communicator 21 to transmit an unlock command to control device 50 by encrypted communication using the session key (S23).

Communicator 51 of control device 50 receives the unlock command. Controller 52 unlocks electric lock 60 based on the received unlock command (S24). More specifically, controller 52 unlocks electric lock 60 by transmitting a control signal to electric lock 60. It should be noted that information terminal 20 is also capable of locking electric lock 60 based on a similar sequence of operation.

As described above, in information processing system 10, management device 30 is capable of securely authorizing information terminal 20 to unlock electric lock 60, using the server certificate and the root certificate.

It should be noted that the object of control of control device 50 is not limited to electric lock 60. Control device 50 may control any device that restricts entry into or exit from a space in facility 80. For example, control device 50 may control the opening and closing of an automatic door provided at the entrance of facility 80.

### [Operation of Storing CRL]

The above-described CRL is generated by management device 30 and transmitted from management device 30 to control device 50, and then stored in storage 53 of control device 50. Hereinafter, the operation of storing a CRL in storage 53 will be described. FIG. 6 is a sequence diagram of the operation of storing CRL in control device 50.

As illustrated in FIG. 6, an authority management table is stored in storage 33 of management device 30. FIG. 7 is a diagram illustrating an example of the authority management table. As illustrated in FIG. 7, in the authority management table, the serial number of a server certificate, the current status (valid or revoked) of the server certificate, the identification information of the visitor (user) who has provided the server certificate, the identification information of electric lock 60 (in FIG. 7, described as smart lock) that can be unlocked by the server certificate, and a temporal condition (validity period) are associated with one another. It can be said that the authority management table is information indicating which server certificates have been issued to which visitors.

First, a manager performs a predetermined operation on operation receiver 34 of management device 30. Operation receiver 34 receives the predetermined operation (S31).

When the predetermined operation is received by operation receiver 34, information processor 32 displays, on display 35, a selection image for selecting a server certificate to be revoked (to be listed in the CRL), based on the authority management table stored in storage 33 (S32). FIG. 8 is a diagram illustrating an example of the selection image for a server certificate. In the selection image illustrated in FIG. 8, server certificates which have already been revoked by the CRL are not displayed. In addition, to revoke a server certificate by a CRL means to revoke a server certificate even when the server certificate is within the validity period, and thus server certificates which have expired are not displayed in the selection image in FIG. 8.

When the selection image of FIG. 8 is displayed, the manager selects a server certificate to be revoked, and performs an instruction operation to instruct revocation of the server certificate that has been selected. Operation receiver 34 receives the instruction operation (S33).

When the predetermined operation is received by operation receiver 34, information processor 32 updates the authority management table (S34), and generates a CRL including a list of the serial numbers of the server certificates that have been revoked even though they are within the validity period (S35). In addition, information processor 32 causes communicator 31 to transmit the generated CRL to control device 50 (S36).

Communicator 51 of control device 50 receives the CRL. Controller 52 stores the received CRL in storage 53 (S37). In other words, controller 52 updates the CRL stored in storage 53.

As described above, the manager can revoke a server certificate that is within a validity period, by performing the predetermined operation on management device 30.

### [Extension of serial number field of CRL]

The format of a CRL is defined as FIG. 9, in section 5.1 of RFC 5280. FIG. 9 is a diagram illustrating the format of a CRL. As illustrated in FIG. 9, in the CRL, serial number information including the serial number of a revoked server certificate, the time and date of revocation, and the CRL entry extension is stored in the field of "Revoked certificate" of the format, as many times as the total number of revoked server certificates.

In other words, the data size of the CRL increases according to the total number of revoked server certificates. In an embedded device such as control device 50, it is difficult to ensure sufficient storage capacity in storage 53, and thus there is a risk that the CRL cannot be stored in storage 53 when the data size of the CRL increases. In other words, there is a risk that control device 50 will not be able to identify the revoked server certificate.

In view of the above, although generally only one serial number can be recorded in one serial number information, two or more consecutive serial numbers are recorded in one serial number information in information processing system 10, thereby reducing the data size of the CRL.

For example, when the data length of the serial number is a fixed length of six bytes, the size of the serial number field (the field indicated as "serial number" in FIG. 9, i.e., the data field in which the serial number is recorded) is extended to 12 bytes, with the first six bytes as a first serial number and the second six bytes as a second serial number.

The serial number information in the first form with the serial number field extended to 12 bytes as described above means that two or more serial numbers that correspond to a first serial number or larger and a second serial number or smaller have been revoked. In other words, two or more serial numbers are recorded in one serial number information. Only one time and date of revocation and one CRL entry extension are recorded for two or more serial numbers.

It should be noted that one serial number is recorded as usual in the serial number information with the size of the serial number field being six bytes. Controller 52 of control device 50 is capable of recognizing that, in a CRL, two or more consecutive serial numbers are recorded in the serial number field when the size of the serial number field is 12 bytes (i.e., larger than the usual six bytes (one example of a predetermined size)).

Serial number information in the second form may be prepared. The serial number information in the second form means that all serial numbers smaller than or equal to a reference serial number or all serial numbers larger than or equal to the reference serial number have been revoked. In this case, the size of the serial number field is extended to seven bytes with the first one byte being a specified range (larger than or equal to or smaller than or equal to) and the following six bytes being the reference serial number. In this case, the reference serial number is the first serial number or the last serial number among the consecutive serial numbers.

As described above, management device 30 records consecutive serial numbers in a predetermined form (i.e., serial numbers are recorded by extending the serial number field) in a CRL. The predetermined form includes the first form in which only the first and last serial numbers among consecutive serial numbers are recorded, and the second form in which the first or last serial number among consecutive serial numbers and a specified range based on the first or last serial number are recorded.

In this manner, it is possible to reduce the data size of the CRL compared to when all consecutive serial numbers are recorded individually, because the information associated with consecutive serial numbers is organized into one. The larger the total number of consecutive serial numbers, the greater the reduction effect in a CRL data size.

### [Generation Operation of CRL]

The following describes the generation operation of a CRL when a serial number field is extended to record serial numbers. FIG. 10 is a flowchart of the generation operation of a CRL. The operation illustrated by the flowchart in FIG. 10 corresponds to the operation in step S35 of FIG. 6.

First, information processor 32 of management device 30 generates serial number information of the server certificate selected by the user for revocation, one per server certificate (serial number) as usual, and adds the serial number information to a CRL (S35a). Next, information processor 32 determines whether the data size of the CRL after the serial number information has been added exceeds a threshold (S35b).

When information processor 32 determines that the data size of the CRL does not exceed the threshold (No in S35b), information processor 32 issues (establishes) the CRL (S35c). When information processor 32 determines that the data size of the CRL exceeds the threshold (Yes in S35b), information processor 32 performs a first process of consolidating serial number information of consecutive serial numbers into one (S35d). In the first process, two or more items of serial number information are consolidated into one item of serial number information with a size of the serial number field being extended. The first process, in other words, is a process to record the serial number by extending the serial number field (to 12 bytes or seven bytes).

Next, information processor 32 determines whether the data size of the CRL after the first process exceeds the threshold (S35e). When information processor 32 determines that the data size of the CRL does not exceed the threshold (No in S35e), information processor 32 issues (establishes) the CRL (S35c). When information processor 32 determines that the data size of the CRL exceeds the threshold (Yes in S35e), information processor 32 performs a second process of increasing a total number of consecutive serial numbers in the CRL (S35f). More specifically, information processor 32 revokes the valid server certificate and issues a new server certificate in place of the valid server certificate (steps S13 to S15 of FIG. 3), thereby increasing the total number of consecutive serial numbers. Information processor 32 then performs the first process again (S35d).

The generation operation of a CRL described above will be explained in more detail with reference to FIG. 11. FIG. 11 is a schematic diagram to illustrate a specific example of the generation operation of a CRL.

In FIG. 11, (a) means that server certificates with serial numbers 1 through 20 have been issued, and server certificates marked with X have been revoked.

In this case, when the process pf step S35a is performed, one item of serial number information is generated per server certificate (serial number), as illustrated in (b) of FIG. 11.

Furthermore, when the first process in step S35d is performed, the items of serial number information of consecutive serial numbers are consolidated into one, as illustrated in (c) of FIG. 11. In (c) of FIG. 11, three items of serial number information corresponding to serial numbers 8, 9, and 10 are consolidated into one item of serial number information, and three items of serial number information corresponding to serial numbers 14, 15, and 16 are consolidated into one item serial number information. In this manner, the data size of the CRL is reduced compared to (b) in FIG. 11.

In the consolidation in (c) of FIG. 11, the serial number information in the first form is used. In other words, the process of extending the serial number field to 12 bytes to record the serial number is performed.

Furthermore, when the second process in step S35f is performed, the three items of serial number information corresponding to serial numbers 2, 3, and 5 are revoked, and serial numbers 21, 22, and 23 are issued as replacement server certificates, as illustrated n in (d) of FIG. 11.

When the first process in step S35d is performed again, the items of serial number information of consecutive serial numbers are consolidated into one, as illustrated in (e) of FIG. 11. In (c) of FIG. 11, six items of serial number information corresponding to serial numbers 1, 2, 3, 4, 5, and 6 are consolidated into one item of serial number information. In this manner, the data size of the CRL is reduced compared to (c) in FIG. 11.

In the consolidation in (e) of FIG. 11, the serial number information in the second form is used. In other words, the process of extending the serial number field to seven bytes to record the serial number is performed.

As described above, management device 30 performs the first process when the data size of the CRL exceeds the threshold. When the data size of the CRL still exceeds the threshold even after the first process has been performed, management device 30 performs the second process and then performs once again the first process. In this manner, management device 30 is capable of keeping the data size of the CRL less than or equal to the threshold.

### [Variation]

In the foregoing embodiment, control device 50 controls the device that restricts the entry or exit of a person to or from a space in facility 80, such as electric lock 60 or an automatic door. However, control device 50 may control a device that restricts the entry or exit of a product. For example, control device 50 may control an electric lock that locks and unlocks the door of a delivery box, a coin-operated locker, a safe-deposit box, or the like. In other words, it is sufficient if control device 50 controls a device that restricts the entry or exit of a product or a person to or from the space.

In addition, information processing system 10 can be applied not only to devices that restrict the entry or exit of a product or a person to or from a space, but also to the case where only a certain person is permitted to control home appliances, such as a lighting device and an air conditioning equipment.

### [Advantageous Effects, Etc.]

Hereinafter, the inventions that can be achieved from the disclosure of this Description will be exemplified, and advantageous effects, etc., yielded from the inventions exemplified will be described.

### (Other Embodiments)

Although the embodiments have been described thus far, the present invention is not limited to the above-described embodiments.

For example, in the above-described embodiments, the information processing system has been implemented by a plurality of devices, but the information processing system may be implemented as a single device. For example, the information processing system may be implemented as a single device corresponding to any of the information terminal, the management device, and the control device. When the information processing system is implemented by a plurality of devices, the structural components (in particular, the functional structural components) included in the information processing system may be distributed in any manner to the plurality of devices.

In addition, in the above-described embodiments, a process performed by a specific processing unit may be performed by a different processing unit. Furthermore, the order of a plurality of processes may be rearranged. Alternatively, the plurality of processes may be performed in parallel.

In addition, each of the structural components in the above-described embodiments may be implemented by executing a software program suitable for the structural component. Each of the structural components may be implemented by means of a program executing unit, such as a CPU or a processor, reading and executing the software program recorded on a recording medium such as a hard disk or a semiconductor memory.

In addition, each of the structural components may be implemented by hardware. For example, each of the structural components may be a circuitry (or an integrated circuit). The circuitries may be configured as a single circuitry as a whole or may be mutually different circuitries. In addition, the circuitries may each be a general-purpose circuit, or may be a dedicated circuit.

In addition, the generic or specific aspects of the present invention may be implemented by a system, a device, a method, an integrated circuit, a computer program, or a computer-readable recording medium such as a compact disc read only memory (CD-ROM). Alternatively, the generic or specific aspects of the present invention may be implemented by any combination of systems, devices, methods, integrated circuits, computer programs, and recording medium.

For example, the present invention may be implemented as the information terminal, the management device, the control device, or the electric lock system (control device and electric lock) according to the above-described embodiments.

Alternatively, the present invention may be implemented as an information processing method executed by a computer such as the information processing system according to the above-described embodiments. In addition, the present invention may be implemented as a program for causing a computer to execute the information processing method. The present invention may be implemented as a non-transitory computer-readable recording medium on which the above-described program is stored.

In addition, the present invention may be implemented as an application program for causing a general-purpose information terminal to function as the information terminal or the management device according to the foregoing embodiments. The present invention may be implemented as a non-transitory computer-readable recording medium on which the above-described application program is stored.

It should be noted that the present invention also includes other forms in which various modifications apparent to those skilled in the art are applied to the embodiments or forms in which structural components and functions in the embodiments are arbitrarily combined within the scope of the present invention.

### [Reference Signs List]

- 10: information processing system
- 20: information terminal
- 21: communicator
- 22, 32: information processor
- 23, 33, 53: storage
- 24, 34: operation receiver
- 25, 35: display
- 30: management device
- 31: communicator (first communicator)
- 50: control device
- 51: communicator (second communicator)
- 52: controller
- 60: electric lock (device)
- 80: facility
- 81: door
by control device 50 that lifts a restriction imposed by a device which restricts entry or exit of a product or a person to or from a space. Control device 50 includes storage 53 in which a root certificate and a CRL that is a list of a serial number of a revoked server certificate are stored. The information processing method includes: step S17 of receiving a server certificate from information terminal 20; step S24 of lifting the restriction imposed by the device when the server certificate received is determined to be valid based on the CRL, and a signature included in the server certificate received is successfully verified using a public key included in the root certificate; and step S18 of, when a size of a data field in which the serial number is recorded in the CRL is larger than a predetermined size, recognizing that consecutive serial numbers are recorded in a predetermined form in the data field.

Such an information processing method is capable of correctly recognizing the serial number of a revoked server certificate.

Invention 12 is a program for causing a computer to execute the information processing method according to any one of Inventions 9 to 11.

With such a program, information processing system 10 and management device 30 are capable of reducing the data size of a CRL, and control device 50 is capable of correctly recognizing the serial number of a revoked server certificate.

### (Other Embodiments)

Although the embodiments have been described thus far, the present invention is not limited to the above-described embodiments.

For example, in the above-described embodiments, the information processing system has been implemented by a plurality of devices, but the information processing system may be implemented as a single device. For example, the information processing system may be implemented as a single device corresponding to any of the information terminal, the management device, and the control device. When the information processing system is implemented by a plurality of devices, the structural components (in particular, the functional structural components) included in the information processing system may be distributed in any manner to the plurality of devices.

In addition, in the above-described embodiments, a process performed by a specific processing unit may be performed by a different processing unit. Furthermore, the order of a plurality of processes may be rearranged. Alternatively, the plurality of processes may be performed in parallel.

In addition, each of the structural components in the above-described embodiments may be implemented by executing a software program suitable for the structural component. Each of the structural components may be implemented by means of a program executing unit, such as a CPU or a processor, reading and executing the software program recorded on a recording medium such as a hard disk or a semiconductor memory.

In addition, each of the structural components may be implemented by hardware. For example, each of the structural components may be a circuitry (or an integrated circuit). The circuitries may be configured as a single circuitry as a whole or may be mutually different circuitries. In addition, the circuitries may each be a general-purpose circuit, or may be a dedicated circuit.

In addition, the generic or specific aspects of the present invention may be implemented by a system, a device, a method, an integrated circuit, a computer program, or a computer-readable recording medium such as a compact disc read only memory (CD-ROM). Alternatively, the generic or specific aspects of the present invention may be implemented by any combination of systems, devices, methods, integrated circuits, computer programs, and recording medium.

For example, the present invention may be implemented as the information terminal, the management device, the control device, or the electric lock system (control device and electric lock) according to the above-described embodiments.

Alternatively, the present invention may be implemented as an information processing method executed by a computer such as the information processing system according to the above-described embodiments. In addition, the present invention may be implemented as a program for causing a computer to execute the information processing method. The present invention may be implemented as a non-transitory computer-readable recording medium on which the above-described program is stored.

In addition, the present invention may be implemented as an application program for causing a general-purpose information terminal to function as the information terminal or the management device according to the foregoing embodiments. The present invention may be implemented as a non-transitory computer-readable recording medium on which the above-described application program is stored.

It should be noted that the present invention also includes other forms in which various modifications apparent to those skilled in the art are applied to the embodiments or forms in which structural components and functions in the embodiments are arbitrarily combined within the scope of the present invention.

### [Reference Signs List]

- 10: information processing system
- 20: information terminal
- 21: communicator
- 22, 32: information processor
- 23, 33, 53: storage
- 24, 34: operation receiver
- 25, 35: display
- 30: management device
- 31: communicator (first communicator)
- 50: control device
- 51: communicator (second communicator)
- 52: controller
- 60: electric lock (device)
- 80: facility
- 81: door

## Claims

1. An information processing system (10) that is used to lift a restriction imposed by a device which restricts entry or exit of a product or a person to or from a space, the information processing system (10) comprising:
an information terminal (20); a management device (30); and a control device (50), wherein
the management device (30) includes:
an information processor (32) that issues a server certificate to the information terminal (20), and generates a revocation list that is a list of a serial number of a revoked server certificate; and
a first communicator that transmits the server certificate issued to the information terminal (20), and transmits the revocation list generated to the control device (50),
the control device (50) includes:
a storage (53) in which a root certificate and the revocation list are stored;
a second communicator that receives the server certificate from the information terminal (20); and
a controller (52) that lifts the restriction imposed by the device when determining that the server certificate received is valid based on the revocation list, and succeeding in verification of a signature included in the server certificate received, using a public key included in the root certificate,
wherein the information processing system is **characterized in that**
the information processor (32) performs a first process of recording consecutive serial numbers in the revocation list in a predetermined form, in which serial numbers are recorded by extending a serial number field, to reduce a data size of the revocation list compared to when the consecutive serial numbers are recorded individually,
wherein
the information processor (32) further performs a second process of revoking a valid server certificate and issues a new server certificate in place of the valid server certificate to increase a total number of consecutive serial numbers in the revocation list.

2. The information processing system according to claim 1, wherein
the information processor (32) performs the first process when the data size of the revocation list exceeds a threshold.

3. The information processing system according to claim 1, wherein
when the data size of the revocation list exceeds a threshold, the information processor (32) performs the first process, and when the data size of the revocation list still exceeds the threshold after performing the first process, performs the first process again after performing the second process.

4. The information processing system according to any one of claims 1 to 3, wherein
the predetermined form includes a first form in which only a first serial number and a last serial number among the consecutive serial numbers are recorded.

5. The information processing system according to any one of claims 1 to 3, wherein
the predetermined form includes a second form in which a first serial number or a last serial number among the consecutive serial numbers and a specified range based on the first serial number or the last serial number are recorded.

6. A management device (30) that issues a server certificate to an information terminal (20), the server certificate being for lifting a restriction imposed by a device which restricts entry or exit of a product or a person to or from a space, the management device (30) comprising:
an information processor (32) that issues the server certificate to the information terminal (20), and generates a revocation list that is a list of a serial number of a revoked server certificate; and
a communicator that transmits the server certificate issued to the information terminal (20), and transmits the revocation list generated to a control device (50), wherein the lifting is realised by the control device (50) that includes a storage (53) in which a root certificate and the revocation list are stored, and when receiving the server certificate from the information terminal (20), lifts the restriction imposed by the device on condition of (a) determining that the server certificate received is valid based on the revocation list and (b) succeeding in verification of a signature included in the server certificate received, using a public key included in the root certificate,
wherein the management device (30) is **characterized in that**
the information processor (32) performs a first process of recording consecutive serial numbers in the revocation list in a predetermined form, in which serial numbers are recorded by extending a serial number field, to reduce a data size of the revocation list compared to when the consecutive serial numbers are recorded individually,
wherein the information processor (32) further performs a second process of revoking a valid server certificate and issues a new server certificate in place of the valid server certificate to increase a total number of consecutive serial numbers in the revocation list.

7. An information processing method performed by an information processing system (10) that is used to lift a restriction imposed by a device which restricts entry or exit of a product or a person to or from a space,
the information processing system (10) including an information terminal (20), a management device (30), and a control device (50),
the information processing method comprising:
issuing, by the management device (30), a server certificate to the information terminal (20), and transmitting, by the management device (30), the server certificate issued to the information terminal (20);
generating, by the management device (30), a revocation list that is a list of a serial number of a revoked server certificate, and transmitting, by the management device (30), the revocation list generated to the control device (50);
receiving, by the control device (50), the server certificate from the information terminal (20);
lifting, by the control device (50), the restriction imposed by the device when the control device (50) determines that the server certificate received is valid based on the revocation list stored in a storage (23, 33, 53) included by the control device (50) and (ii) succeeds in verification of a signature included in the server certificate received, using a public key included in a root certificate stored in the storage (23, 33, 53);
**characterized by**
recording, by the management device (30), consecutive serial numbers in the revocation list in a predetermined form, in which serial numbers are recorded by extending a serial number field, to reduce a data size of the revocation list compared to when the consecutive serial numbers are recorded individually,
performing a second process of revoking a valid server certificate and issuing a new server certificate in place of the valid server certificate to increase a total number of consecutive serial numbers in the revocation list.

8. An information processing method performed by a management device (30) that issues a server certificate to an information terminal (20), the server certificate being for lifting a restriction imposed by a device which restricts entry or exit of a product or a person to or from a space, the information processing method comprising:
issuing the server certificate to the information terminal (20), and transmitting the server certificate issued to the information terminal (20); and
generating a revocation list that is a list of a serial number of a revoked server certificate, and transmitting the revocation list generated to a control device (50), wherein the lifting is realised by the control device (50) that includes a storage (23, 33, 53) in which a root certificate and the revocation list are stored, and when receiving the server certificate from the information terminal (20), lifts the restriction imposed by the device on condition of (a) determining that the server certificate received is valid based on the revocation list and (b) succeeding in verification of a signature included in the server certificate received, using a public key included in the root certificate,
wherein the information processing method is **characterized by** further comprising: recording consecutive serial numbers in the revocation list , in a predetermined form, in which serial numbers are recorded by extending a serial number field, to reduce a data size of the revocation list compared to when the consecutive serial numbers are recorded individually,
performing a second process of revoking a valid server certificate and issuing a new server certificate in place of the valid server certificate to increase a total number of consecutive serial numbers in the revocation list.

9. A computer program comprising instructions which, when executed by a management device, causes the management device to execute the method of claim 7, or when executed by an information terminal, a management device and a control device, causes the information terminal, the management device and the control device to execute the method of claim 8.

## Patentansprüche

1. Informationsverarbeitungssystem (10), das dazu dient, eine Beschränkung aufzuheben, die von einer Vorrichtung auferlegt wird, die einen Zugang oder Abgang eines Produkts oder einer Person zu einem bzw. aus einem Raum einschränkt, wobei das Informationsverarbeitungssystem (10) umfasst:
ein Informationsendgerät (20); eine Verwaltungsvorrichtung (30); und eine Steuerungsvorrichtung (50), wobei
die Verwaltungsvorrichtung (30) aufweist:
einen Informationsprozessor (32), der ein Serverzertifikat an das Informationsendgerät (20) ausstellt und eine Widerrufsliste erzeugt, die eine Liste einer Seriennummer eines widerrufenen Serverzertifikats ist; und
eine erste Kommunikationseinrichtung, die das ausgestellte Serverzertifikat an das Informationsendgerät (20) überträgt und die erzeugte Widerrufsliste an die Steuerungsvorrichtung (50) überträgt,
wobei die Steuerungsvorrichtung (50) aufweist:
einen Speicher (53), in dem ein Stammzertifikat und die Widerrufsliste gespeichert sind;
eine zweite Kommunikationseinrichtung, die das Serverzertifikat von dem Informationsendgerät (20) empfängt; und
eine Steuereinheit (52), die die von der Vorrichtung auferlegte Beschränkung aufhebt, wenn sie bestimmt, dass das empfangene Serverzertifikat auf der Grundlage der Widerrufsliste gültig ist, und eine Überprüfung einer in dem empfangenen Serverzertifikat enthaltenen Signatur erfolgreich ist, unter Verwendung eines öffentlichen Schlüssels, der in dem Stammzertifikat enthalten ist,
wobei das Informationsverarbeitungssystem **dadurch gekennzeichnet ist, dass**
der Informationsprozessor (32) einen ersten Vorgang eines Aufzeichnens aufeinanderfolgender Seriennummern in der Widerrufsliste in einer vorgegebenen Form durchführt, in der die Seriennummern durch Erweitern eines Seriennummernfeldes aufgezeichnet werden, um den Datenumfang der Widerrufsliste im Vergleich zu einem Fall, in dem die aufeinanderfolgenden Seriennummern einzeln aufgezeichnet werden, zu verringern,
wobei
der Informationsprozessor (32) ferner einen zweiten Vorgang zum Widerrufen eines gültigen Serverzertifikats durchführt und anstelle des gültigen Serverzertifikats ein neues Serverzertifikat ausstellt, um eine Gesamtzahl der aufeinanderfolgenden Seriennummern in der Widerrufsliste zu erhöhen.

2. Informationsverarbeitungssystem nach Anspruch 1, wobei
der Informationsprozessor (32) den ersten Vorgang durchführt, wenn der Datenumfang der Widerrufsliste einen Schwellenwert überschreitet.

3. Informationsverarbeitungssystem nach Anspruch 1, wobei
wenn der Datenumfang der Widerrufsliste einen Schwellenwert überschreitet, der Informationsprozessor (32) den ersten Vorgang durchführt, und wenn der Datenumfang der Widerrufsliste nach Durchführen des ersten Vorgangs den Schwellenwert weiterhin überschreitet, den ersten Vorgang nach Durchführen des zweiten Vorgangs erneut durchführt.

4. Informationsverarbeitungssystem nach einem der Ansprüche 1 bis 3, wobei
die vorgegebene Form eine erste Form aufweist, in der nur eine erste Seriennummer und eine letzte Seriennummer unter den aufeinanderfolgenden Seriennummern aufgezeichnet werden.

5. Informationsverarbeitungssystem nach einem der Ansprüche 1 bis 3, wobei
die vorgegebene Form eine zweite Form aufweist, in der eine erste Seriennummer oder eine letzte Seriennummer unter den aufeinanderfolgenden Seriennummern und auf der Grundlage der ersten Seriennummer oder der letzten Seriennummer ein festgelegter Bereich aufgezeichnet werden.

6. Verwaltungsvorrichtung (30), die ein Serverzertifikat an ein Informationsendgerät (20) ausstellt, wobei das Serverzertifikat dazu dient, eine von einer Vorrichtung auferlegte Beschränkung aufzuheben, die einen Zugang oder Abgang eines Produkts oder einer Person zu einem bzw. aus einem Raum einschränkt, wobei die Verwaltungsvorrichtung (30) umfasst:
einen Informationsprozessor (32), der das Serverzertifikat an das Informationsendgerät (20) ausstellt und eine Widerrufsliste erzeugt, die eine Liste einer Seriennummer eines widerrufenen Serverzertifikats ist; und
eine Kommunikationseinrichtung, die das ausgestellte Serverzertifikat an das Informationsendgerät (20) überträgt und die erzeugte Widerrufsliste an eine Steuerungsvorrichtung (50) überträgt, wobei das Aufheben durch die Steuerungsvorrichtung (50) realisiert wird, die einen Speicher (53) aufweist, in dem ein Stammzertifikat und die Widerrufsliste gespeichert sind, und bei Empfang des Serverzertifikats von dem Informationsendgerät (20) die von der Vorrichtung auferlegte Beschränkung aufhebt, wenn sie (a) bestimmt, dass das empfangene Serverzertifikat auf der Grundlage der Widerrufsliste gültig ist, und (b) eine Überprüfung einer in dem empfangenen Serverzertifikat enthaltenen Signatur erfolgreich ist, unter Verwendung eines öffentlichen Schlüssels, der in dem Stammzertifikat enthalten ist,
wobei die Verwaltungsvorrichtung (30) **dadurch gekennzeichnet ist, dass**
der Informationsprozessor (32) einen ersten Vorgang durchführt, bei dem aufeinanderfolgende Seriennummern in der Widerrufsliste in einer vorgegebenen Form aufgezeichnet werden, wobei die Seriennummern durch Erweitern eines Seriennummernfeldes aufgezeichnet werden, um den Datenumfang der Widerrufsliste im Vergleich zu einem Fall, in dem die aufeinanderfolgenden Seriennummern einzeln aufgezeichnet werden, zu verringern,
wobei der Informationsprozessor (32) ferner einen zweiten Vorgang zum Widerrufen eines gültigen Serverzertifikats durchführt und anstelle des gültigen Serverzertifikats ein neues Serverzertifikat ausstellt, um eine Gesamtzahl der aufeinanderfolgenden Seriennummern in der Widerrufsliste zu erhöhen.

7. Informationsverarbeitungsverfahren, das von einem Informationsverarbeitungssystem (10) ausgeführt wird, das dazu dient, eine von einer Vorrichtung auferlegte Beschränkung aufzuheben, die einen Zugang oder Abgang eines Produkts oder einer Person zu einem bzw. aus einem Raum einschränkt,
wobei das Informationsverarbeitungssystem (10) ein Informationsendgerät (20), eine Verwaltungsvorrichtung (30) und eine Steuerungsvorrichtung (50) aufweist,
wobei das Informationsverarbeitungsverfahren umfasst:
Ausstellen eines Serverzertifikats durch die Verwaltungsvorrichtung (30) an das Informationsendgerät (20) und Übertragen des ausgestellten Serverzertifikats durch die Verwaltungsvorrichtung (30) an das Informationsendgerät (20);
Erzeugen einer Widerrufsliste, die eine Liste einer Seriennummer eines widerrufenen Serverzertifikats ist, durch die Verwaltungsvorrichtung (30) und Übertragen der erzeugten Widerrufsliste an die Steuerungsvorrichtung (50) durch die Verwaltungsvorrichtung (30);
Empfangen des Serverzertifikats von dem Informationsendgerät (20) durch die Steuerungsvorrichtung (50);
Aufheben der von der Vorrichtung auferlegten Beschränkung durch die Steuerungsvorrichtung (50), wenn die Steuerungsvorrichtung (50) (i) bestimmt, dass das empfangene Serverzertifikat auf der Grundlage der Widerrufsliste, die in einem in der Steuerungsvorrichtung (50) enthaltenen Speicher (23, 33, 53) gespeichert ist, gültig ist, und (ii) eine Überprüfung einer in dem empfangenen Serverzertifikat enthaltenen Signatur erfolgreich ist, unter Verwendung eines öffentlichen Schlüssels, der in einem in dem Speicher (23, 33, 53) gespeicherten Stammzertifikat enthalten ist;
**gekennzeichnet durch**
Aufzeichnen aufeinanderfolgender Seriennummern in der Widerrufsliste durch die Verwaltungsvorrichtung (30) in einer vorgegebenen Form, in der die Seriennummern durch Erweitern eines Seriennummernfeldes aufgezeichnet werden, um den Datenumfang der Widerrufsliste im Vergleich zu einem Fall, in dem die aufeinanderfolgenden Seriennummern einzeln aufgezeichnet werden, zu verringern,
Durchführen eines zweiten Vorgangs zum Widerrufen eines gültigen Serverzertifikats und zum Ausstellen eines neuen Serverzertifikats anstelle des gültigen Serverzertifikats, um eine Gesamtzahl der aufeinanderfolgenden Seriennummern in der Widerrufsliste zu erhöhen.

8. Informationsverarbeitungsverfahren, das von einer Verwaltungsvorrichtung (30) ausgeführt wird, die ein Serverzertifikat an ein Informationsendgerät (20) ausstellt, wobei das Serverzertifikat dazu dient, eine von einer Vorrichtung auferlegte Beschränkung aufzuheben, die einen Zugang oder Abgang eines Produkts oder einer Person zu einem bzw. aus einem Raum einschränkt, wobei das Informationsverarbeitungsverfahren umfasst:
Ausstellen des Serverzertifikats an das Informationsendgerät (20) und Übertragen des ausgestellten Serverzertifikats an das Informationsendgerät (20); und
Erzeugen einer Widerrufsliste, die eine Liste einer Seriennummer eines widerrufenen Serverzertifikats ist, und Übertragen der erzeugten Widerrufsliste an eine Steuerungsvorrichtung (50), wobei das Aufheben durch die Steuerungsvorrichtung (50) realisiert wird, die einen Speicher (23, 33, 53) enthält, in dem ein Stammzertifikat und die Widerrufsliste gespeichert sind, und bei Empfang des Serverzertifikats von dem Informationsendgerät (20) die von der Vorrichtung auferlegte Beschränkung aufhebt, wenn sie (a) bestimmt, dass das empfangene Serverzertifikat auf der Grundlage der Widerrufsliste gültig ist, und (b) eine Überprüfung einer in dem empfangenen Serverzertifikat enthaltenen Signatur erfolgreich ist, unter Verwendung eines öffentlichen Schlüssels, der in dem Stammzertifikat enthalten ist,
wobei das Informationsverarbeitungsverfahren **dadurch gekennzeichnet ist, dass** es ferner umfasst: Aufzeichnen aufeinanderfolgender Seriennummern in der Widerrufsliste in einer vorgegebenen Form, in der die Seriennummern durch Erweitern eines Seriennummernfeldes aufgezeichnet werden, um den Datenumfang der Widerrufsliste im Vergleich zu einem Fall, in dem die aufeinanderfolgenden Seriennummern einzeln aufgezeichnet werden, zu verringern,
Durchführen eines zweiten Vorgangs zum Widerrufen eines gültigen Serverzertifikats und zum Ausstellen eines neuen Serverzertifikats anstelle des gültigen Serverzertifikats, um eine Gesamtzahl der aufeinanderfolgenden Seriennummern in der Widerrufsliste zu erhöhen.

9. Computerprogramm, das Anweisungen umfasst, die, wenn sie von einer Verwaltungsvorrichtung ausgeführt werden, bewirken, dass die Verwaltungsvorrichtung das Verfahren nach Anspruch 7 ausführt, oder, wenn sie von einem Informationsendgerät, einer Verwaltungsvorrichtung und einer Steuerungsvorrichtung ausgeführt werden, bewirken, dass das Informationsendgerät, die Verwaltungsvorrichtung und die Steuerungsvorrichtung das Verfahren nach Anspruch 8 ausführen.

## Revendications

1. Un système de traitement d'informations (10) qui est utilisé pour la levée d'une restriction imposée par un dispositif qui impose une restriction d'entrée ou de sortie d'un produit ou d'une personne vers ou depuis un espace, le système de traitement d'informations (10) comprenant :
un terminal d'informations (20) ; un dispositif de gestion (30) ; et un dispositif de commande (50), dans lequel
le dispositif de gestion (30) comprend :
un processeur d'informations (32) qui procède à l'émission d'un certificat serveur au terminal d'informations (20), et génère une liste de révocation qui est une liste d'un numéro de série d'un certificat serveur révoqué ; et
un premier communicateur qui procède à la transmission du certificat serveur émis au terminal d'informations (20), et procède à la transmission de la liste de révocation générée au dispositif de commande (50),
le dispositif de commande (50) comprend :
une mémoire (53) dans laquelle un certificat racine et la liste de révocation sont enregistrés;
un second communicateur qui procède à la réception du certificat serveur depuis le terminal d'informations (20) ; et
un contrôleur (52) qui procède à la levée de la restriction imposée par le dispositif lorsqu'il détermine que le certificat serveur reçu est valide sur la base de la liste de révocation, et réussit la vérification d'une signature incluse dans le certificat serveur reçu, en utilisant une clé publique incluse dans le certificat racine,
dans lequel le système de traitement d'informations étant **caractérisé en ce que**
le processeur d'informations (32) réalise un premier procédé d'enregistrement de numéros de série consécutifs dans la liste de révocation sous une forme prédéterminée, dans laquelle les numéros de série sont enregistrés par extension d'un champ de numéro de série, afin de réduire une taille de données de la liste de révocation par rapport à la situation où les numéros de série consécutifs sont enregistrés individuellement,
dans lequel
le processeur d'informations (32) réalise en outre un second procédé de révocation d'un certificat serveur valide et procède à l'émission d'un nouveau certificat serveur à la place du certificat serveur valide afin d'augmenter un nombre total de numéros de série consécutifs dans la liste de révocation.

2. Système de traitement d'informations selon la revendication 1, dans lequel
le processeur d'informations (32) réalise le premier procédé lorsque la taille de données de la liste de révocation dépasse un seuil.

3. Système de traitement d'informations selon la revendication 1, dans lequel
lorsque la taille de données de la liste de révocation dépasse un seuil, le processeur d'informations (32) réalise le premier procédé, et lorsque la taille de données de la liste de révocation dépasse toujours le seuil après la réalisation du premier procédé, réalise à nouveau le premier procédé après avoir réalisé le second procédé.

4. Système de traitement d'informations selon l'une quelconque des revendications 1 à 3, dans lequel
la forme prédéterminée comprend une première forme dans laquelle seul un premier numéro de série et un dernier numéro de série parmi les numéros de série consécutifs sont enregistrés.

5. Système de traitement d'informations selon l'une quelconque des revendications 1 à 3, dans lequel
la forme prédéterminée comprend une seconde forme dans laquelle un premier numéro de série ou un dernier numéro de série parmi les numéros de série consécutifs et une plage spécifiée basée sur le premier numéro de série ou le dernier numéro de série sont enregistrés.

6. Dispositif de gestion (30) qui procède à l'émission d'un certificat serveur à un terminal d'informations (20), le certificat serveur étant destiné à la levée d'une restriction imposée par un dispositif qui impose une restriction d'entrée ou de sortie d'un produit ou d'une personne vers ou depuis un espace, le dispositif de gestion (30) comprenant :
un processeur d'informations (32) qui procède à l'émission du certificat serveur au terminal d'informations (20), et génère une liste de révocation qui est une liste d'un numéro de série d'un certificat serveur révoqué ; et
un communicateur qui procède à la transmission du certificat serveur émis au terminal d'informations (20), et procède à la transmission de la liste de révocation générée à un dispositif de commande (50), dans lequel la levée est réalisée par le dispositif de commande (50) qui
comprend une mémoire (53) dans laquelle un certificat racine
et la liste de révocation sont enregistrés, et lorsqu'il reçoit le certificat serveur du terminal d'informations (20), procède à la levée de la restriction imposée par le dispositif à condition de (a) déterminer que le certificat serveur reçu est valide sur la base de la liste de révocation et (b) réussir la vérification d'une signature incluse dans le certificat serveur reçu, en utilisant une clé publique incluse dans le certificat racine,
dans lequel le dispositif de gestion (30) est **caractérisé en ce que**
le processeur d'informations (32) réalise un premier procédé d'enregistrement de numéros de série consécutifs dans la liste de révocation sous une forme prédéterminée, dans laquelle les numéros de série sont enregistrés par extension d'un champ de numéro de série, afin de réduire une taille de données de la liste de révocation par rapport à la situation où les numéros de série consécutifs sont enregistrés individuellement,
dans lequel le processeur d'informations (32) réalise en outre un second procédé de révocation d'un certificat serveur valide et procède à l'émission d'un nouveau certificat serveur à la place du certificat serveur valide afin d'augmenter un nombre total de numéros de série consécutifs dans la liste de révocation.

7. Procédé de traitement d'informations réalisé par un système de traitement d'informations (10) qui est utilisé pour la levée d'une restriction imposée par un dispositif qui impose une restriction d'entrée ou de sortie d'un produit ou d'une personne vers ou depuis un espace,
le système de traitement d'informations (10) comprenant un terminal d'informations (20), un dispositif de gestion (30), et un dispositif de commande (50),
le procédé de traitement d'informations comprenant :
l'émission, par le dispositif de gestion (30), d'un certificat serveur au terminal d'informations (20), et la transmission, par le dispositif de gestion (30), du certificat serveur émis au terminal d'informations (20) ;
la génération, par le dispositif de gestion (30), d'une liste de révocation qui est une liste d'un numéro de série d'un certificat serveur révoqué, et la transmission, par le dispositif de gestion (30), de la liste de révocation générée au dispositif de commande (50) ;
la réception, par le dispositif de commande (50), du certificat serveur depuis le terminal d'informations (20) ;
la levée, par le dispositif de commande (50), de la restriction imposée par le dispositif lorsque le dispositif de commande (50) détermine que le certificat serveur reçu est valide sur la base de la liste de révocation enregistrée dans une mémoire (23, 33, 53) comprise par le dispositif de commande (50) et (ii) réussit la vérification d'une signature incluse dans le certificat serveur reçu, en utilisant une clé publique incluse dans un certificat racine enregistré dans la mémoire (23, 33, 53) ;
**caractérisé par**
l'enregistrement, par le dispositif de gestion (30), de numéros de série consécutifs dans la liste de révocation sous une forme prédéterminée, dans laquelle les numéros de série sont enregistrés par extension d'un champ de numéro de série, afin de réduire une taille de données de la liste de révocation par rapport à la situation où les numéros de série consécutifs sont enregistrés individuellement,
la réalisation d'un second procédé de révocation d'un certificat serveur valide et l'émission d'un nouveau certificat serveur à la place du certificat serveur valide afin d'augmenter un nombre total de numéros de série consécutifs dans la liste de révocation.

8. Procédé de traitement d'informations réalisé par un dispositif de gestion (30) qui procède à l'émission d'un certificat serveur à un terminal d'informations (20), le certificat serveur étant destiné à la levée d'une restriction imposée par un dispositif qui impose une restriction d'entrée ou de sortie d'un produit ou d'une personne vers ou depuis un espace, le procédé de traitement d'informations comprenant :
l'émission du certificat serveur au terminal d'informations (20), et la transmission du certificat serveur émis au terminal d'informations (20) ; et
la génération d'une liste de révocation qui est une liste d'un numéro de série d'un certificat serveur révoqué, et transmission de la liste de révocation générée à un dispositif de commande (50), lequel la levée est réalisée par le dispositif de commande (50) qui
comprend une mémoire (23, 33, 53) dans laquelle
un certificat racine et la liste de révocation sont enregistrés, et lorsqu'il reçoit le certificat serveur du terminal d'informations (20), procède à la levée de la restriction imposée par le dispositif à condition de (a) déterminer que le certificat serveur reçu est valide sur la base de la liste de révocation et (b) réussir la vérification d'une signature incluse dans le certificat serveur reçu, en utilisant une clé publique incluse dans le certificat racine,
dans lequel le procédé de traitement d'informations étant **caractérisé par** comprenant en outre : l'enregistrement de numéros de série consécutifs dans la liste de révocation, sous une forme prédéterminée, dans laquelle les numéros de série sont enregistrés par extension d'un champ de numéro de série, afin de réduire une taille de données de la liste de révocation par rapport à la situation où les numéros de série consécutifs sont enregistrés individuellement,
la réalisation d'un second procédé de révocation d'un certificat serveur valide et émission d'un nouveau certificat serveur à la place du certificat serveur valide afin d'augmenter un nombre total de numéros de série consécutifs dans la liste de révocation.

9. Programme informatique comprenant des instructions qui, lorsqu'elles sont exécutées par un dispositif de gestion, amènent le dispositif de gestion à exécuter le procédé de la revendication 7, ou lorsqu'elles sont exécutées par un terminal d'informations, un dispositif de gestion et un dispositif de commande, amènent le terminal d'informations, le dispositif de gestion et le dispositif de commande à exécuter le procédé de la revendication 8.
